Europäisches Patentamt

European Patent Office

Office européen des brevets

(11) Veröffentlichungsnummer: **0 300 227 B1**

# EUROPÄISCHE PATENTSCHRIFT

(45) Veröffentlichungstag der Patentschrift: **13.01.93**

(51) Int. Cl.⁵: **C25B 1/24**

(21) Anmeldenummer: **88110178.6**

(22) Anmeldetag: **25.06.88**

(54) Verfahren zur Herstellung von Stickstofftrifluorid.

(30) Priorität: **04.07.87 DE 3722163**

(43) Veröffentlichungstag der Anmeldung:
**25.01.89 Patentblatt 89/04**

(45) Bekanntmachung des Hinweises auf die
Patenterteilung:
**13.01.93 Patentblatt 93/02**

(84) Benannte Vertragsstaaten:
**AT BE CH DE ES FR GB GR IT LI NL SE**

(56) Entgegenhaltungen:
**CH-A- 403 732**
**FR-A- 2 244 713**
**US-A- 3 235 474**

**CHEMICAL ABSTRACTS, Band 74, Nr. 24, 16. Juni 1971, Seite 627, Ref. Nr. 134113a; Columbus, Ohio, US; A.TASAKA et al.: "Anode effect in KF-RNH2 systems".**

**CHEMICAL ABSTRACTS, Band 71, Nr. 6, 11. August 1969, Seite 419, Ref. Nr. 26950a; Clumbus, Ohio, US; M. SCHMEISSER et al.: "Electrochemical fluorination of nitrogen-containing compounds to produce nitrogen trifluoride".**

(73) Patentinhaber: **Kali-Chemie Aktiengesellschaft**
**Postfach 220, Hans-Böckler-Allee 20**
**W-3000 Hannover 1(DE)**

(72) Erfinder: **Sartori, Peter**
**Bismarckstrasse 90**
**W-4100 Duisburg-1(DE)**

(74) Vertreter: **Lauer, Dieter, Dr.**
**c/o Kali-Chemie Aktiengesellschaft Postfach 220**
**W-3000 Hannover 1(DE)**

Rank Xerox (UK) Business Services

**Beschreibung**

Die Erfindung betrifft ein Verfahren zur Herstellung von $NF_3$ durch Schmelzelektrolyse eines Elektrolytgemisches, welches fluorwasserstoffsaure Salze des Ammoniaks enthält.

In der Technik hat $NF_3$ u.a. als Füllgas für Blitzlichtlampen, als Fluorierungsmittel, als Oxidationsmittel in Raketenantrieben und als Plasmaätzgas Verwendung gefunden.

Verglichen mit einigen anderen Herstellungsmethoden hat sich in der Praxis die Schmelzelektrolyse von Assoziaten des Typs $NH_4F \cdot nHF$ als in technischem Maßstab durchführbar erwiesen. Nach O. Glemser, J. Schröder und J. Knaak, Chem.Ber., 99, Seite 371 bis 374 (1966) ist eine gute $NF_3$-Ausbeute (23-32%) zu erwarten, wenn die Zahl n zwischen 1,2 und 1,8 liegt und die Schmelzelektrolyse bei etwa 130 ° C durchgeführt wird. Die Durchführung ist jedoch nicht unproblematisch, da bei derartigen Temperaturen durch Sublimation feigesetztes $NH_4F$ in einem separaten Abscheider aufgefangen werden muß, um Unfälle durch Verstopfen der Gasableitungsrohre zu verhindern. Bei diesem Verfahren entstehen ferner teilfluorierte Amine, die zur explosiven Zersetzung neigen.

Die Aufgabe der Erfindung besteht darin, ein Verfahren bereitzustellen, durch das die technischen Schwierigkeiten bei der Durchführung des vorbekannten Verfahrens zur Herstellung von $NF_3$ überwunden werden. Diese Aufgabe wird durch erfindungsgemäße Verfahren gelöst.

Das erfindungsgemäße Verfahren zur Herstellung von $NF_3$ durch Schmelzelektrolyse unter Verwendung von Salzen des Ammoniaks mit Fluorwasserstoff ist dadurch gekennzeichnet, daß man ein Elektrolytgemisch, welches Salze von Ammoniak mit Fluorwasserstoff und Salze von Hydrazin mit Fluorwasserstoff enthält, der Schmelzelektrolyse unterwirft.

Das Gewichtsverhältnis der salze des Ammoniaks und des Hydrazins beträgt 9:1 bis 1:9, bevorzugt 8:2 bis 3:7, insbesondere bevorzugt 7:3.

Neben Salzen des Ammoniaks und des Fluorwasserstoffs vom Typ $NH_4F \cdot nHF$ mit n = 1-2,5, bevorzugt n = 1-1,8, insbesondere bevorzugt n = 1 enthalten die im erfindungsgemäßen Verfahren eingesetzten Schmelzelektrolytgemische als weiteren Bestandteil Salze von Hydrazin mit Fluorwasserstoff. Die Schmelzelektrolytgemische können ggf. weitere Bestandteile wie Harnstoff, Pyridin, KF, KF $\cdot$ HF. Fluorwasserstoff, etc. enthalten. Die im erfindungsgemäßen Verfahren eingesetzten Schmelzelektrolytgemische enthalten das Hydrazin vorteilhaft in Form von Verbindungen des Typs $N_2H_4 \cdot xHF$ mit x = 1-2, bevorzugt x = 2.

In besonders bevorzugter Weise liegt das Salz des Ammoniaks in Form von $NH_4F \cdot HF$ und das Salz des Hydrazins in Form von $N_2H_4 \cdot 2HF$ vor.

Die Erfindung umfaßt auch im erfindungsgemäßen Verfahren eingesetzte Elektrolytgemische. Diese erfindungsgemäßen Gemische enthalten fluorwasserstoffsaure Salze des Ammoniaks und des Hydrazins, sowie ggf. weitere Bestandteile wie Harnstoff, Pyridin, KF, KF $\cdot$ HF, Fluorwasserstoff etc. Unter fluorwasserstoffsauren Salzen des Ammoniaks werden Verbindungen des Typs $NH_4F \cdot n\,HF$ mit n = 1-2,5, bevorzugt n = 1-1,8, insbesondere bevorzugt n = 1, verstanden. Unter fluorwasserstoffsauren Salzen des Hydrazins werden Verbindungen des Typs $N_2H_4 \cdot xHF$ mit x = 1-2, bevorzugt x = 2 verstanden. In bevorzugter Weise enthalten die erfindungsgemäßen Gemische 10-90 Gew.-% $NH_4F \cdot HF$ und 90-10 % $N_2H_4 \cdot 2\,HF$. Besonders bevorzugt sind Gemische bestehend aus etwa 50 bis etwa 80 Gew.-% $NH_4F \cdot HF$ und etwa 50 bis etwa 20 Gew`-% $N_2H_4 \cdot 2HF$, insbesondere Gemische bestehend aus etwa 70 Gew.-% $NH_4F \cdot HF$ und etwa 30 Gew.-% $N_2H_4 \cdot 2HF$.

Die einfachste Methode zur Herstellung der erfindungsgemäßen Gemische besteht in der mechanischen Vermengung der Salze des Ammoniaks, bevorzugt $NH_4F \cdot HF$, und des Hydrazins, bevorzugt $N_2H_4 \cdot 2 HF$, sowie ggf. weiterer Bestandteile, beispielsweise in einer Kugelmühle.

Die Durchführung der Schmelzelektrolyse im erfindungsgemäßen Verfahren erfolgt in an sich bekannter Weise. Verwendbar sind Apparaturen ohne Trennung der Elektrodenräume: ein Beispiel für eine solche Apparatur findet sich in der schon erwähnten Veröffentlichung von O. Glemser und Mitarbeitern. Einsetzbar sind auch Apparaturen mit getrennter Abführung der Elektrolysegase, wie sie von J. Massonne, Chem. Ing. Tech. 12, S. 695 bis 700 (1969) beschrieben sind: in derartigen Apparaturen fällt das $NF_3$-haltige Rohgas im wesentlichen wasserstoffrei an.

Als Elektroden können Kohleelektroden oder Metallelektroden, vorzugsweise Nickelelektroden, verwendet werden. Die Elektrodenspannung wird im Bereich 2-12 V, bevorzugt im Bereich 5,0 - 6,5 V, insbesondere bevorzugt auf etwa 6 V eingeregelt. Die Elektrolyttemperatur liegt zwischen 60 ° C und 150 ° C, bevorzugt zwischen 110 und 130 ° C, insbesondere bei etwa 118 ° C.

Das erfindungsgemäße Verfahren zur Herstellung von $NF_3$ kann batchweise oder kontinuierlich durchgeführt werden. Im letzteren Fall wird in die Elektrolysezelle die entsprechend dem Verbrauch notwendige Menge Elektrolyt in gewünschter Zusammensetzung kontinuierlich, z.B. über eine Schnecke, eingetragen. Das gebildete $NF_3$-Gas wird kontinuierlich abgeleitet.

Die Reinigung der $NF_3$-haltigen Rohgase erfolgt in an sich bekannter Weise, z.B. durch überleiten über KF zur HF-Entfernung, überleiten über Oxidationsmittel wie Braunstein zur Entfernung von ggf. enthaltenen Aminfluoriden, Abpumpen von $N_2$ und $O_2$ nach Kondensation des $NF_3$. Für die technische Reinigung bietet sich das Durchleiten des Rohgases durch einen mit NaCl oder $NaCl/CaCl_2$ gefüllten Turm und anschließender Wäsche mit Alkalilauge an. Nach einer Trocknung kann es ggf., abhängig vom Verwendungszweck, noch weiter gereinigt werden.

Das erfindungsgemäße Verfahren, das auf der Elektrolyse der erfindungsgemäßen Gemische beruht, zeichnet sich durch einige überraschende Vorteile aus:

- die Zusammensetzung des Schmelzelektrolytgemisches ändert sich während der Elektrolyse nicht merklich; während der Elektrolyse bleiben die Randbedingungen (Elektrolyttemperatur, Spannung, Stromstärke) und die Zusammensetzung der als Elektrolyseprodukt gebildeten Rohgase im wesentlichen konstant, wodurch sich die technische Durchführung besonders in größerem Maßstab vereinfacht.
- Die Elektrolyse ist bei tieferer Temperatur durchführbar als beim bekannten Verfahren üblich; die Lebensdauer der Elektrolysezelle verlängert sich entsprechend.
- Beim Einsatz des erfindungsgemäßen Elektrolytgemisches, zumal bei der niedrigeren Elektrolyttemperatur des erfindungsgemäßen Verfahrens, ist die Sublimationsneigung des $NH_4F$ stark zurückgedrängt.
- Das gebildete $NF_3$-haltige Rohgas enthält weniger Nebenprodukte.

In den folgenden Beispielen wird die Erfindung weiter erläutert, ohne ihren Schutzumfang einzuschränken.

Beispiel 1 (Herstellung erfindungsgemäßer Gemische): Trockenes $N_2H_4 \cdot 2\,HF$ wird in bekannter Weise hergestellt, indem man Hydrazinhydrat mit 40 %iger, wässriger Flußsäure in Wasser umsetzt, das Wasser abdampft, den Rückstand mit Ethanol wäscht und über KOH trocknet. Ammoniumbifluorid wird wasserfrei eingesetzt.

Die so erhaltenen, flußsauren Salze des Ammoniaks und des Hydrazins werden, gegebenenfalls nach dem Zusatz weiterer Bestandteile, innig vermischt, beispielsweise durch eine Kugelmühle.

Auf diese Weise wurden die folgenden, in Tabelle 1 angegebenen, erfindungsgemäßen Gemische hergestellt:

Tabelle 1

| Schmelzpunkte von Gemischen aus $NH_4F \cdot HF$ und $N_2H_4 \cdot 2\,HF$ | | |
|---|---|---|
| $NH_4F \cdot HF$ | $N_2H_4 \cdot 2HF$ | Smp. |
| 10 Gew.-% | 90 Gew.-% | 134 °C |
| 20 Gew.-% | 80 Gew.-% | 132 °C |
| 30 Gew.-% | 70 Gew.-% | 129 °C |
| 50 Gew.-% | 50 Gew.-% | 123 °C |
| 70 Gew.-% | 30 Gew.-% | 118 °C |
| 80 Gew.-% | 20 Gew.-% | 116 °C |
| 90 Gew.-% | 10 Gew.-% | 122 °C |

Beispiel 2 (Herstellung von $NF_3$ nach dem erfindungsgemäßen Verfahren):

Ein Gemisch von 70 Gew.-% $NH_4F \cdot HF$ und 30 Gew.-% $N_2H_4 \cdot 2\,HF$ mit einem Schmelzpunkt von 118 °C wurde in einer Elektrolysezelle mit nichtgetrennten Elektrodenräumen und Nickelelektrode auf etwa 118 °C erhitzt und nach kurzer Spülung der Elektrodenräume mit $N_2$ elektrolysiert. Die Spannung wurde auf 6 V eingeregelt, die Stromstärke lag nach Einstellung des Gleichgewichts bei 12 A. Zunächst erfolgte die Zersetzung von Feuchtigkeit im Elektrolyten, anschließend die Bildung von $NF_3$. Das $NF_3$-haltige Rohgas wurde abgeleitet.

Der Anteil von $NF_3$ im Rohgas betrug 18 %. Nach der Reinigung des Rohgases durch fraktionierte Kondensation über KF und Braunstein wurde Reingas mit einem $NF_3$-Gehalt von > 99 % erhalten (Analyse durch GC).

Die Stromausbeute lag bei 55 % der Theorie, bezogen auf einen Verbrauch von 6 Faraday pro Mol $NF_3$.

**Patentansprüche**

**Patentansprüche für folgende Vertragsstaaten : AT, BE, CH, LI, DE, FR, GB, GR, IT, NL, SE**

1.  Verfahren zur Herstellung von $NF_3$ durch Schmelzelektrolyse unter Verwendung von Salzen des Ammoniaks und des Fluorwasserstoffs, dadurch gekennzeichnet, daß man ein Elektrolytgemisch, welches Salze von Ammoniak mit Fluorwasserstoff und Salze von Hydrazin mit Fluorwasserstoff enthält, der Schmelzelektrolyse unterwirft.

2.  Verfahren nach Anspruch 1, dadurch gekennzeichnet, daß das Gewichtsverhältnis der Salze des Ammoniaks und des Hydrazins 9:1 bis 1:9, bevorzugt 8:2 bis 3:7, insbesondere bevorzugt 7:3, beträgt.

3.  Verfahren nach einem der vorhergehenden Ansprüche, dadurch gekennzeichnet, daß als Salz des Ammoniaks Verbindungen des Typs $NH_4F \cdot nHF$ mit $n = 1\text{-}2,5$, bevorzugt $n = 1\text{-}1,8$, insbesondere bevorzugt $n = 1$, eingesetzt werden.

4.  Verfahren nach einem der vorhergehenden Ansprüche, dadurch gekennzeichnet, daß als Salz des Hydrazins Verbindungen des Typs $N_2H_4 \cdot x\,HF$ mit $x = 1\text{-}2$, bevorzugt $x = 2$, eingesetzt werden.

5.  Verfahren nach einem der vorhergehenden Ansprüche, dadurch gekennzeichnet, daß die Schmelzelektrolyse bei einer Elektrolyttemperatur von 60-150 °C, bevorzugt von 110 - 130 °C, insbesondere bevorzugt bei etwa 118 °C, durchgeführt wird.

6.  Verfahren nach einem der vorhergehenden Ansprüche, dadurch gekennzeichnet, daß die Schmelzelektrolyse bei einer Elektrodenspannung im Bereich 2-12 V, bevorzugt im Bereich 5,0 - 6,5 V, insbesondere bevorzugt bei etwa 6 V, durchgeführt wird.

7.  Gemische, enthaltend fluorwasserstoffsaure Salze des Ammoniaks vom Typ $NH_4 \cdot nHF$ mit $n = 1$ bis 2,5 und des Hydrazins vom Typ $N_2H_4 \cdot xHF$ mit $x = 1$ bis 2.

8.  Gemische nach Anspruch 7, enthaltend als fluorwasserstoffsaures Salz des Ammoniaks Verbindungen des Typs $NH_4F \cdot nHF$ mit $n = 1\text{-}1,8$, insbesondere bevorzugt $n = 1$.

9.  Gemische nach Anspruch 7, enthaltend als fluorwasserstoffsaures Salz des Hydrazins Verbindungen des Typs $N_2H_4 \cdot x\,HF$ mit $x = 2$.

10. Gemische nach einem der Ansprüche 7 bis 9, enthaltend 10 - 90 Gew.-% $NH_4F \cdot HF$ und 90 - 10 Gew.-% $N_2H_4 \cdot 2\,HF$.

11. Gemische bestehend aus etwa 50 bis etwa 80 Gew.-% $NH_4F \cdot HF$ und etwa 50 bis etwa 20 Gew.-% $N_2H_4 \cdot 2HF$, insbesondere bestehend aus etwa 70 Gew.-% $NH_4F \cdot HF$ und etwa 30 Gew.-% $N_2H_4 \cdot 2\,HF$.

**Patentansprüche für den Vertragsstaat : ES**

1.  Verfahren zur Herstellung von $NF_3$ durch Schmelzelektrolyse unter Verwendung von Salzen des Ammoniaks und des Fluorwasserstoffs, dadurch gekennzeichnet, daß man ein Elektrolytgemisch, welches Salze von Ammoniak mit Fluorwasserstoff und Salze von Hydrazin mit Fluorwasserstoff enthält, der Schmelzelektrolyse unterwirft.

2.  Verfahren nach Anspruch 1, dadurch gekennzeichnet, daß das Gewichtsverhältnis der Salze des Ammoniaks und des Hydrazins 9:1 bis 1:9, bevorzugt 8:2 bis 3:7, insbesondere bevorzugt 7:3, beträgt.

3.  Verfahren nach einem der vorhergehenden Ansprüche, dadurch gekennzeichnet, daß als Salz des Ammoniaks Verbindungen des Typs $NH_4F \cdot nHF$ mit $n = 1\text{-}2,5$, bevorzugt $n = 1\text{-}1,8$, insbesondere bevorzugt $n = 1$, eingesetzt werden.

4.  Verfahren nach einem der vorhergehenden Ansprüche, dadurch gekennzeichnet, daß als Salz des Hydrazins Verbindungen des Typs $N_2H_4 \cdot x\,HF$ mit $x = 1\text{-}2$, bevorzugt $x = 2$, eingesetzt werden.

5.  Verfahren nach einem der vorhergehenden Ansprüche, dadurch gekennzeichnet, daß die Schmelzelektrolyse bei einer Elektrolyttemperatur von 60-150 °C, bevorzugt von 110 - 130 °C, insbesondere bevorzugt bei etwa 118 °C, durchgeführt wird.

6. Verfahren nach einem der vorhergehenden Ansprüche, dadurch gekennzeichnet, daß die Schmelzelektrolyse bei einer Elektrodenspannung im Bereich 2-12 V, bevorzugt im Bereich 5,0 - 6,5 V, insbesondere bevorzugt bei etwa 6 V, durchgeführt wird.

7. Verfahren zur Herstellung von Gemischen, enthaltend fluorwasserstoffsaure Salze des Ammoniaks vom Typ $NH_4 \cdot nHF$ mit $n = 1$ bis 2,5 und des Hydrazins vom Typ $N_2H_4 \cdot xHF$ mit $x = 1$ bis 2, wobei man die genannten Salze sowie gegebenenfalls weitere Bestandteile mechanisch miteinander vermengt.

8. Verfahren nach Anspruch 7, dadurch gekennzeichnet, daß man als fluorwasserstoffsaures Salz des Ammoniaks Verbindungen des Typs $NH_4F \cdot nHF$ mit $n = 1$-1,8, insbesondere bevorzugt $n = 1$ einsetzt.

9. Verfahren nach Anspruch 7, dadurch gekennzeichnet, daß man als fluorwasserstoffsaures Salz des Hydrazins Verbindungen des Typs $N_2H_4 \cdot x$ HF mit $x = 2$ einsetzt.

10. Verfahren nach einem der Ansprüche 7 bis 9, dadurch gekennzeichnet, daß man Gemische enthaltend 10 - 90 Gew.-% $NH_4F \cdot HF$ und 90 - 10 Gew.-% $N_2H_4 \cdot 2$ HF erzeugt.

11. Verfahren nach Anspruch 10, dadurch gekennzeichnet, daß man Gemische bestehend aus etwa 50 bis etwa 80 Gew.-% $NH_4F \cdot HF$ und etwa 50 bis etwa 20 Gew.-% $N_2H_4 \cdot 2HF$, insbesondere bestehend aus etwa 70 Gew.-% $NH_4F \cdot HF$ und etwa 30 Gew.-% $N_2H_4 \cdot 2$ HF, erzeugt.

**Claims**
**Claims for the following Contracting States : AT, BE, CH, LI, DE, FR, GB, GR, IT, NL, SE**

1. A method for producing $NF_3$ by fused salt electrolysis using salts of ammonia and of hydrofluoric acid, characterised in that an electrolyte mixture which contains salts of ammonia with hydrofluoric acid and salts of hydrazine with hydrofluoric acid is subjected to fused salt electrolysis.

2. A method according to Claim 1, characterised in that the weight ratio of the salts of ammonia and of hydrazine is 9:1 to 1:9, preferably 8:2 to 3:7, particularly preferably 7:3.

3. A method according to one of the preceding Claims, characterised in that compounds of the type $NH_4F \cdot nHF$ with $n = 1$-2.5, preferably $n = 1$-1.8, particularly preferably $n = 1$, are used as the salt of ammonia.

4. A method according to one of the preceding Claims, characterised in that compounds of the type $N_2H_4 \cdot x$ HF with $x = 1$-2, preferably $x = 2$, are used as the salt of hydrazine.

5. A method according to one of the preceding Claims, characterised in that the fused salt electrolysis is carried out at an electrolyte temperature of 60-150° C, preferably 110-130° C, particularly preferably at approximately 118° C.

6. A method according to one of the preceding Claims, characterised in that the fused salt electrolysis is carried out at an electrode potential in the range 2-12 V, preferably in the range 5.0-6.5 V, particularly preferably at approximately 6 V.

7. Mixtures, containing hydrofluoric acid salts of ammonia of the type $NH_4 \cdot nHF$ with $n = 1$ to 2.5 and of hydrazine of the type $N_2H_4 \cdot xHF$ with $x = 1$ to 2.

8. Mixtures according to Claim 7, containing compounds of the type $NH_4F \cdot nHF$ with $n = 1$-1.8, particularly preferably $n = 1$, as the hydrofluoric acid salt of ammonia.

9. Mixtures according to Claim 7, containing compounds of the type $N_2H_4 \cdot x$ HF with $x = 2$ as the hydrofluoric acid salt of hydrazine.

**10.** Mixtures according to one of Claims 7 to 9, containing 10-90 % by weight $NH_4F \cdot HF$ and 90-10 % by weight $N_2H_4 \cdot 2\,HF$.

**11.** Mixtures consisting of about 50 to about 80% by weight $NH_4F \cdot HF$ and of about 50 to about 20% by weight $N_2H_4 \cdot 2HF$, in particular consisting of about 70% by weight $NH_4F \cdot HF$ and about 30% by weight $N_2H_4 \cdot 2HF$.

**Claims for the following Contracting State : ES**

**1.** A method for producing $NF_3$ by fused salt electrolysis using salts of ammonia and of hydrofluoric acid, characterised in that an electrolyte mixture which contains salts of ammonia with hydrofluoric acid and salts of hydrazine with hydrofluoric acid is subjected to fused salt electrolysis.

**2.** A method according to Claim 1, characterised in that the weight ratio of the salts of ammonia and of hydrazine is 9:1 to 1:9, preferably 8:2 to 3:7, particularly preferably 7:3.

**3.** A method according to one of the preceding Claims, characterised in that compounds of the type $NH_4F \cdot nHF$ with n = 1-2.5, preferably n = 1-1.8, particularly preferably n = 1, are used as the salt of ammonia.

**4.** A method according to one of the preceding Claims, characterised in that compounds of the type $N_2H_4 \cdot x\,HE$ with x = 1-2, preferably x = 2, are used as the salt of hydrazine.

**5.** A method according to one of the preceding Claims, characterised in that the fused salt electrolysis is carried out at an electrolyte temperature of 60-150° C, preferably 110-130° C, particularly preferably at approximately 118° C.

**6.** A method according to one of the preceding Claims, characterised in that the fused salt electrolysis is carried out at an electrode potential in the range 2-12 V, preferably in the range 5.0-6.5 V, particularly preferably at approximately 6 V.

**7.** A method for producing mixtures, containing hydrofluoric acid salts of ammonia of the type $NH_4 \cdot nHF$ with n = 1 to 2.5 and of hydrazine of the type $N_2H_4 \cdot xHF$ with x = 1 to 2, in which the afore-mentioned salts and also optionally additional constituents are mixed together mechanically.

**8.** A method according to Claim 7, characterised in that compounds of the type $NH_4F \cdot nHF$ with n = 1-1.8, particularly preferably n = 1, are used as the hydrofluoric acid salt of ammonia.

**9.** A method according to Claim 7, characterised in that compounds of the type $N_2H_4 \cdot x\,HF$ with x = 2 are used as the hydrofluoric acid salt of hydrazine.

**10.** A method according to one of Claims 7 to 9, characterised in that mixtures containing 10-90 % by weight $NH_4F \cdot HF$ and 90-10 % by weight $N_2H_4 \cdot 2\,HF$ are produced.

**11.** A method according to Claim 10, characterised in that mixtures consisting of about 50 to about 80% by weight $NH_4F \cdot HF$ and of about 50 to about 20% by weight $N_2H_4 \cdot 2HF$, in particular consisting of about 70% by weight $NH_4F \cdot HF$ and about 30% by weight $N_2H_4 \cdot 2HF$, are produced.

**Revendications**

**Revendications pour les Etats contractants suivants : AT, BE, CH, LI, DE, FR, GB, GR, IT, NL, SE**

**1.** Procédé de production de $NF_3$ par électrolyse au fondu avec utilisation de sels de l'ammoniac et du fluorure d'hydrogène , caractérisé en ce qu'on soumet à l'électrolyse en masse fondue un mélange d'électrolytes , qui contient des sels de l'ammoniac avec du fluorure d'hydrogène et des sels de l'hydrazine avec le fluorure d'hgdrogène .

**2.** Procédé selon la revendication 1 , caractérisé en ce que re rapport pondéral entre les sels d'ammoniac et de l'hydrazine vaut de 9:1 à 1:9 , avantageusement de 8:2 à 3:7, notamment ce rapport vaut de préférence 7:3 .

3. Procédé selon l'une des revendications précédentes, caractérisé en ce qu'on utilise comme sel de l'ammoniac des composés du type $NH_4F.nHF$ ,avec n = 1 à 2,5 , de préférence n vaut 1 à 1,8 et,de façon particulièrement préférée, n = 1 .

4. Procédé selon l'une des revendications précédentes, caractérisé en ce qu'on utilise comme sel de l'hydrazine des composés du type $N_2H_4$ .x HF ,avec x = 1 à 2 ,de préférence x = 2.

5. Procédé selon l'une des revendications précédentes, caractérisé en ce que l'électrolyse au fondu est conduite à une température des électrolytes de 60 à 150 °C, de préférence de 110 à 130°C et de façon particulièrement préférée à 118°C environ

6. Procédé selon l'une des revendications précédentes, caractérisé en ce que l'électrolyse au fondu est conduite à une tension entre électrodes se situant entre 2 et 12 V,de préférence entre 5,0 et 6,5 V,de façon particulièrement préférée à environ 6 V .

7. Mélanges,contenant des sels du fluorure d'hydrogène et de l'ammoniac,du type $NH_4.nHF$ ,avec n valant 1 à 2,5 ,et de l'hydrazine,du type $N_2H_4$.xHF, avec x valant 1 à 2.

8. Mélanges selon la revendication 7 ,contenant comme sel de fluorure d'hydrogène et de l'ammoniac des composés du type $NH_4F.nHF$ avec n valant 1 à 1,8 et de façon particulièrement préférée n vaut 1 .

9. Mélanges selon la revendication 7 , contenant comme sel de fluorure d'hydrogène et de l'hydrazine des composés du type $N_2H_4$. x HF , avec x valant 2 .

10. Mélanges selon l'une des revendications 7 à 9 ,contenant 10 à 90 % en poids de $NH_4F.HF$ et 90 à 10 % en poids de $N_2H_4$. 2 HF .

11. Mélanges consistant en environ 50 à environ 80 % en poids de $NH_4F.HF$ et en environ 50 à 20 % en poids de $N_2H_4$. 2 HF et consistant en particulier en environ 70 % en poids de $NH_4F$. HF et en environ 30 % en poids de $N_2H_4$ . 2 HF .

**Revendications pour l'Etat contractant suivant : ES**

1. Procédé pour produire $NF_3$ par électrolyse au fondu avec utilisation de sels de l'ammoniac et du fluorure d'hydrogène , caractérisé en ce qu'on soumet à l'électrolyse au fondu un mélange d'électrolytes , qui contient des de l'ammoniac avec le fluorure d'hydrogène et des sels de l'hydrazine avec du fluorure d'hydrogène .

2. Procédé selon la revendication 1 ,caractérisé en ce que le rapport pondéral des sels de l'ammoniac et de l'hydrazine vaut de 9:1 à 1:9 ,de préférence de 8:2 à 3:7 et de façon particulièrement préférée 7:3.

3. Procédé selon l'une des revendications précédentes, caractérisé en ce qu'on utilise comme sel de l'ammoniac des composés du type $NH_4.nHF$ avec n valant 1 à 2,5 ,de préférence n valant 1 à 1,8 et de façon particulièrement préférée n = 1.

4. Procédé selon l'une des revendications précédentes, caractérisé en ce qu'on utilise comme sel de l'hydrazine des composés du type $N_2H_4$. x HF, avec x valant 1 à 2 ,de préférence x valant 2.

5. Procédé selon l'une des revendications précédentes, caractérisé en ce qu'on conduit l'électrolyse au fondu à une température des électrolytes de 60 à 150°C ,de préférence de 110°C à 130°C ,de façon particulièrement préférée à 118°C environ .

6. Procédé selon l'une des revendications précédentes, caractérisé en ce qu'on conduit l'électrolyse au fondu à une tension entre électrodes se situant entre 2 et 12 V ,de préférence entre 5,0 et 6,5 V et de façon particulièrement préférée à environ 6 V .

7.  Procédé pour produire des mélanges ,contenant des sels de fluorure d'hydrogène et de l'ammoniac du type $NH_4.nHF$ avec n valant 1 à 2,5 et de l'hydrazine du type $N_2H_4.xHF$ , avec x valant 1 à 2 ,selon lequel on mélange mécaniquement ensemble les sels cités et éventuellement d'autres constituants.

8.  Procédé selon la revendication 7 ,caractérisé en ce qu'on utilise comme sel de fluorure d'hydrogène( acide fluorhydrique) et de l'ammoniac des composés du type $NH_4F.nHF$ avec n valant 1 à 1,8 ,et de façon particulièrement préférée n = 1.

9.  Procédé selon la revendication 7 ,caractérisé en ce qu'on utilise comme sel de fluorure d'hydrogène ( acide fluorhydrique) de l'hydrazine, des composés du type $N_2H_4.xHF$ avec x valant 2 .

10. Procédé selon l'une des revendications 7 à 9 , caractérisé en ce qu'on produit des mélanges contenant 10 à 90 % en poids de $NH_4F.HF$ et 90 à 10 % en poids de $N_2H_4. 2 HF$.

11. Procédé selon la revendication 10 , caractérisé en ce qu'on produit des mélanges consistant en environ 50 à environ80 % en poids de $NH_4F.HF$ et environ 50 à environ 20 % en poids de $N_2H_4.2HF$ et consistant en particulier en environ 70 % en poids de $NH_4F.HF$ et en environ 30 % en poids de $N_2H_4.2HF$.